# EUROPÄISCHE PATENTSCHRIFT

(11) **EP 4 035 857 B1**
(45) Veröffentlichungstag und Bekanntmachung des Hinweises auf die Patenterteilung: **07.06.2023**
(21) Anmeldenummer: 22150502.7
(22) Anmeldetag: 07.01.2022
(51) Int. Cl.: B28B 1/00, B28B 1/52, B28B 19/00, B33Y 40/20

(54) **VERFAHREN ZUR HERSTELLUNG VON ARMIERTEN 3D-GEDRUCKTEN BETON- BZW. MÖRTELBASIERTEN OBJEKTEN**
METHOD FOR THE PRODUCTION OF REINFORCED 3D PRINTED CONCRETE OR MORTAR-BASED OBJECTS
PROCÉDÉ DE FABRICATION D'OBJETS IMPRIMÉS EN 3D EN BÉTON ARMÉ OU À BASE DE MORTIER

(30) Priorität: 01.02.2021 AT 500622021
(43) Veröffentlichungstag der Anmeldung: 03.08.2022
(73) Patentinhaber: Baumit Beteiligungen GmbH, 2754 Waldegg (AT)
(72) Erfinder: Artner, Eduard, 4040 Linz (AT); Weißmann, Peter, 2754 Waldegg (AT); Wallner, Christoph, 2753 Dreistetten (AT); Balog, Oliver, 2560 Grillenberg (AT); Gutmann, Martin, 1020 Wien (AT); Schipfer-Dohr, Katja, 3380 Pöchlarn (AT)
(74) Vertreter: Müllner, Martin

(56) Entgegenhaltungen:
- EP-A1- 3 431 172
- EP-A1- 3 501 769
- JP-A- H0 666 026
- HARALD KLOFT ET AL: "Bewehrungsstrategien für den Beton-3D-Druck", BETON- UND STAHLBETONBAU, JOHN WILEY, HOBOKEN, USA, Bd. 115, Nr. 8, 6. Juli 2020 (2020-07-06), Seiten 607-616, XP071133715, ISSN: 0005-9900, DOI: 10.1002/BEST.202000032

## Beschreibung

### Technisches Gebiet

Die vorliegende Erfindung betrifft ein Verfahren zur Herstellung von armierten 3D-gedruckten beton- bzw. mörtelbasierten Objekten wie z.B. plattenförmigen Gegenständen, die eben, einfach gekrümmt oder doppelt gekrümmt sind, wobei zunächst ein nicht armierter Grundkörper im 3D-Druck hergestellt wird.

### Stand der Technik

Eine der wesentlichen Grundeigenschaften von zementgebundenen mineralischen Baustoffen (Betonen und Mörteln) ist, dass diese hohe Druckfestigkeiten, aber vergleichsweise nur geringe Zug- bzw. Biegezugfestigkeiten aufweisen.

Im Belastungsfall wirken durch statisch oder dynamisch eingebrachte Kräfte auf das Bauteil fast immer Zug- bzw. Biegezugkräfte ein, die bei Überschreiten der Eigenfestigkeit des Bauteils in der Regel dafür verantwortlich sind, dass es zum Bauteilversagen/Bruch kommt. Daher ist es beim Auftreten höherer Kräfte bei statischen bzw. dynamischen Belastungen derzeit Stand der Technik, derartige zementgebundene Bauteile mit zugfesten Materialien zu bewehren. Zur Bewehrung/Bauteilverstärkung werden überwiegend Stahleinlagen, aber auch alternative Werkstoffe aus faserartigem Basismaterial wie Carbon, SiC, Basalt, Keramik, Metall, Wollastonit, AR-Glas oder polymeren Werkstoffen in Form von Fasern, Gittern, Stäben, Fäden, Gelegen, Geflechten, Seilen, Schnüren, Trägern etc. eingesetzt.

All diese Werkstoffe haben die Grundeigenschaft, dass sie sehr hohe Zug- bzw. Biegezugkräfte aufnehmen können und daher in Kombination mit den relativ spröden, zementgebundenen mineralischen Baustoffen in Bauteilen eine deutliche Verbesserung der Zug- bzw. Biegezugfestigkeitseigenschaften erzielen.
1. Solche Bewehrungen sind jedoch bei 3D-Druck auf Basis Beton bzw. Mörtel nur mit relativ großem technischem Aufwand zu realisieren. Ein wichtiger Vorteil von 3D-Druck besteht darin, dass das Herstellverfahren an sich vollautomatisch durchgeführt werden kann: man bewegt das programmierbare, mechatronische Düsenführungssystem (z.B. einen auf einem Roboterarm angebrachten Düsenkopf) zu den gewünschten Stellen und bringt eine genau definierte Menge Beton oder Mörtel auf. Die Vorrichtung kann dabei ohne irgendeinen Umbau die verschiedensten Objekte dreidimensional herstellen ("drucken").
2. Sieht man jedoch eine Bewehrung vor, so ist die Vorrichtung entweder weniger flexibel oder wesentlich komplizierter. So ist in EP 3431172 A, Fig. 15 gezeigt, dass man auf ein im 3D-Druck hergestelltes, noch weiches, plattenförmiges Objekt ein Gitter auflegt und dann mit einer Düse weiteren Beton aufspritzt. Dies setzt aber voraus, dass man zuvor für jedes 3D-Objekt ein angepasstes Gitter mit entsprechenden Abmessungen herstellt, wodurch die oben angesprochene Flexibilität der Herstellung weitgehend verloren geht und kostentechnische Nachteile entstehen. EP 3431172 A offenbart ein Verfahren zur Herstellung von armierten 3D-gedruckten beton-basierten Objekten nach dem Oberbegriff des Anspruchs 1.
3. In den Fig. 16-20 dieser Schrift ist eine Art "Doppeldüse" gezeigt, durch welche Beton oder Mörtel zu beiden Seiten einer Armierung aufgesprüht werden kann. Es kann sich hierbei um textile oder faserartige Bewehrungselemente, aber auch um Bewehrungen aus metallischen, polymeren oder anderen nichtmetallischen Werkstoffen handeln. Abgesehen davon, dass solch eine "Doppeldüse" an sich bereits recht aufwändig ist, kommt noch der Aufwand des Einlegens der Bewehrungselemente hinzu, egal, ob dieses Einlegen nun automatisch oder manuell erfolgt.

Aufgrund dieser Problematik ist auch schon vorgeschlagen worden, einen faserbewehrten Beton für den 3D-Druck zu verwenden, siehe z.B. WO 2019/089771 . Gemäß dieser Schrift werden die Fasern gleich zu Beginn in den trockenen Beton eingemischt (siehe Absatz [0123]). Dabei ist jedoch die Faserzugabemenge auf etwa 1% begrenzt, und auch die möglichen Faserlängen sind begrenzt: bei höheren Einsatzmengen und größeren Faserlängen nimmt die Viskosität des Mörtels stark zu, der Transport des Frischmörtels zur Düse wird schwierig, und die Fasern bleiben zum Teil im Inneren der Düse hängen, wodurch diese zum Verstopfen neigt. Auch ist der Frischmörtel nicht mehr kompakt. Nachteilig ist weiters, dass die Zugabe von Fasern gleichmäßig im gesamten Beton bzw. Mörtel die Herstellungskosten deutlich erhöht.

Von Durapact ist eine Düse bekannt, siehe https://durapact.de/product/concentric-spray-head/, in der ein Endlos-Glasfaserstrang mit hoher Geschwindigkeit mit Hilfe eines Messers auf definierte Faserlänge geschnitten wird, wonach die Faserstücke mittels Luftdrucks in den Mörtel eingebracht werden, so dass feinteiliger Mörtel und Fasern in einem Luft-Mörtel-Faser-Gemisch aus der Düse geschleudert werden.

Diese Düse wird bisher für die Herstellung von Glasfaserbetonplatten unter Verwendung von vorgefertigten Formen eingesetzt. Dabei wird Beton zu dieser speziellen Düse gepumpt, dort werden etwa 5% Glasfasern beigemengt. Das Material wird anschließend in die Formen gespritzt, verdichtet und nach einer bestimmten Zeit ausgeformt.

Eine weitere Anwendung dieser Düse wird in der Publikation "Robotic AeroCrete - A novel robotic spraying and surface treatment technology for the production of slender reinforced concrete elements" (http://papers.cumincad.org/data/works/att/ecaadesigradi2019_675.pdf) beschrieben. Dieses Verfahren zeichnet sich dadurch aus, dass glasfaserarmierter Spritzbeton mit dieser Düse und mit Hilfe eines Roboters auf beliebig geformte, maßgeschneiderte Bewehrungsgitter bzw. -netze aufgesprüht wird. Diese wirken während des Sprühvorgangs als Schalung und im ausgehärteten Zustand des Betons als Bewehrung. Dieses Verfahren soll es ermöglichen, schlanke, bewehrte Betonelemente wirtschaftlich herzustellen.

### Kurzbeschreibung der Erfindung

Es ist Aufgabe der vorliegenden Erfindung, ein Verfahren zur Herstellung von frei geformten armierten 3D-gedruckten beton- oder mörtelbasierten Gegenständen zu schaffen, das flexibel ist, mit herkömmlichen 3D-Druck-Düsen durchführbar ist, nur wenig zusätzlichen Materialaufwand bedingt und keinen Formenbau benötigt.

Diese Aufgabe wird durch ein Verfahren der eingangs genannten Art erfindungsgemäß dadurch gelöst, dass auf den 3D-gedruckten Grundkörper ein faserarmierter Beton oder Mörtel mit einer Düse aufgesprüht wird, in welcher ein Endlos-Faserstrang mit Hilfe eines Messers auf definierte Faserlänge geschnitten wird, wonach die Faserstücke mittels Luftdrucks in den Beton bzw. Mörtel eingebracht werden, so dass feinteiliger Mörtel und Fasern in einem Luft-Mörtel-Faser-Gemisch aus der Düse geschleudert und auf den 3D-gedruckten Grundkörper im Verbund appliziert werden.

Im Grunde handelt es sich also um eine neue Verwendung der von Durapact bekannten Düse. Wurde diese bisher für die Herstellung von durchgehend faserarmierten Platten unter Verwendung einer vorgefertigten Negativform verwendet, dient sie erfindungsgemäß dazu, nicht armierte, im 3D-Druck mit Beton oder Mörtel hergestellte Gegenstände oberflächlich zu armieren bzw. zu bewehren. Damit werden die Nachteile der bisherigen Verfahren zur Herstellung armierter 3D-Druck-Gegenstände vermieden: Im Gegensatz zu der oben erwähnten EP 3431172 A, Fig. 15 ist es nicht notwendig, für jeden Gegenstand zuvor eine eigene Armierung in der richtigen Größe anzufertigen. Im Gegensatz zu den Fig. 16-20 dieser Schrift sind weder spezielle Düsen notwendig, noch ist es notwendig, Armierungsstreifen oder vorgefertigte Armierungsgitter manuell oder automatisch zu positionieren. Im Gegensatz zur erwähnten WO 2019/089771 A ist es nicht notwendig, den Gegenstand zur Gänze aus faserbewehrtem Material herzustellen, wodurch Kosten gespart werden. Da mit der erfindungsgemäß vorgesehenen Düse relativ lange Fasern in den Beton bzw. Mörtel eingebracht werden können, kommt man vergleichsweise mit wenig Fasermaterial aus (die Fasern befinden sich nur an der Oberfläche der Gegenstände), erzielt durch die Faserverstärkung aber dennoch sehr hohe Festigkeitswerte.

Das erfindungsgemäße Verfahren ermöglicht es, durch Aufbringung einer zusätzlichen Faserbetonschicht plattenförmige 3D-gedruckte Bauteile (diese können ebenflächig, gekrümmt oder doppelt gekrümmt sein) sowie 3D-Druckobjekte verschiedenster räumlicher Geometrien so zu bewehren, dass eine deutliche Erhöhung der Zug- und Biegezugfestigkeit erreicht wird und damit einhergehend das Auftreten einer möglichen Schädigung wie z.B. das Auftreten von Rissen oder eines Sprödbruches verhindert wird.

Das Besondere dabei ist, dass durch die Kombination dieser beiden Methoden (3D-Druck/Aufsprühen der Faserbewehrung) freigeformte 3D-Objekte sehr schnell und kostengünstig statisch verstärkt werden können, ohne die Bewehrung direkt in den Werkstoff des 3D-Druckbauteils einbringen zu müssen. Die Biegezugfestigkeit des bewehrten Bauteils verdoppelt sich dabei (von 8-10 N/mm² ohne Bewehrung auf bis zu 18-20 N/mm² bei einer Faserspritzbeton-Auftragsstärke von 8-9 mm; Stärke des 3D-gedruckten Grundkörpers: ca. 12-14 mm), und die aufgesprühte Schicht legt sich homogen in jede Vertiefung/Riefe der Oberfläche des Druckbauteiles, ohne Hohlräume/Fehlstellen/Schwachstellen zu generieren. Zusätzlich können durch die Wahl der entsprechenden Fasern (lang, kurz, Glas, Carbon, Polymer, Basalt, Metall, mineralisch, etc.) die Eigenschaften noch weiter variiert werden.

Je nach Dicke und Eigenschaften der zur Bewehrung aufgebrachten Faserbetonschicht kann die Bewehrung sowohl als sogenannte Kollapsbewehrung als auch als Bewehrung mit statischer Funktion ausgelegt werden.

Das Aufbringen der Fasern kann dabei vollflächig auf bestimmten (innen oder aussen) oder allen Seiten des Bauteils (innen und aussen) oder auch partiell auf bestimmten Teilflächen erfolgen. Dies ermöglicht die gezielte Verstärkung von Bauteilen oder Bauteilabschnitten und somit einen ressourcenschonenden Einsatz. Es wird dadurch möglich, eine gradierte Bewehrung zu applizieren, d.h. dort, wo stärkere Kräfte auf das Bauteil einwirken, gezielt die Bewehrung zu verstärken oder Bereiche, wo keine Kräfte einwirken, ohne Bewehrung auszuführen.

Das Auf- bzw. Einbringen sogenannter Kollapsbewehrungen ist essentiell im Hoch- und Tiefbau. Diese "Sicherheitsschicht" hat eine wichtige funktionelle Schutzfunktion und verhindert das spontane Totalversagen eines Bauteils wie z.B. den Einsturz einer Brücke oder das Herabfallen von Fassadenplatten nach Auftreten von z.B. Rissen in den Bauteilen. Schäden an Personen, Bauteilen, Infrastruktur und größere finanzielle Schäden sollen und können damit zielsicher verhindert werden.

Weiters ermöglicht das neu entwickelte Verfahren, Befestigungselemente verschiedenster Art (Schraubanker, Schraubösen, Aufhängungen, Metallleisten etc.) gleichzeitig mit dem Aufsprühen des faserarmierten Betons oder Mörtels in das 3D-Objekt einzusprühen und kraftschlüssig mit diesem zu verbinden, ohne das 3D-Objekt mechanisch zu bearbeiten (Vermeidung von Bohren, Fräsen etc).

Im Bereich Hochbau ist es Stand der Technik, Platten aus verschiedensten Materialien (Glas, Metall, Holz, Polymere, Beton etc.) an Wänden (Paneelen, Zwischenwänden), Böden (Doppelböden, ...) und Decken (Schallabsorber, Kühl-/Heizdecken, bauteilaktivierte Decken, ...) zu unterschiedlichen Zwecken zu montieren. Speziell im Hinblick auf die Sicherheitsrelevanz ist vor allem bei Betonplatten (aufgrund des relativ hohen spezifischen Gewichtes) an Wänden und Decken ein absolut sicheres und verlässliches Verankerungssystem notwendig. Hierfür können z.B. spezielle Krallensysteme ("Sicheln"), Befestigungsschienen (z.B. "Ankerschienen") oder ähnliches an den Plattenrückseiten in den Beton/Mörtel eingearbeitet bzw. befestigt werden.

Durch das erfindungsgemäße Aufbringen des Faserspritzbetons auf die Plattenrückseite, an der die Verankerungssysteme befestigt sind, wird eine Verstärkung der Aufhängung und damit eine zusätzliche Sicherheit gegen Schäden wie z.B. einen Ausbruch der Verankerung und daraus folgend gegen ein Herabstürzen der Platten erreicht.

Schließlich ist es günstig, eine zusätzliche mechanische Verdichtung der aufgesprühten Bewehrungsschicht durch Walzen, Glätten o.ä. durchzuführen. Dadurch werden die technischen Bauteileigenschaften wie Zugfestigkeit und Haftverbund verbessert.

### Beschreibung der Ausführungsarten

Bei dem erfindungsgemäßen Verfahren wird ein spezieller, feiner, fließfähiger Mörtel/Beton (es kann sich hierbei um den für 3D-Druck geeigneten Basismörtel, mit dem der 3D-Grundkörper hergestellt wurde, oder auch um ein eigens dafür konzipiertes Mörtelprodukt handeln) bis zur Düse gepumpt, ein Spezialtool schneidet einen Endlos-Faserstrang mit hoher Geschwindigkeit mit Hilfe eines Messers auf definierte Faserlänge und bringt dann die Faserstücke mittels Luftdrucks in den Mörtel ein, so dass feinteiliger Mörtel und Fasern in einem Luft-Mörtel-Faser-Gemisch gegen den zu bewehrenden Grundkörper "geschleudert" werden und dort eine dichte, innig miteinander verbundene Schicht bilden. Diese Schicht kann bei Bedarf noch zusätzlich verdichtet werden.

Auf diesem Weg wird der mit Fasern versetzte Mörtel/Beton schichtartig auf die Betonplatte bzw. das 3D-Bauteil aufgebracht. Hierfür können alle Arten von faserartigen Werkstoffen, bevorzugt Hochleistungsfasern, eingesetzt werden, die sich aufwickeln und schneiden lassen (z.B. Glasfasern, PAN-Fasern, Carbonfasern, Polymerfasern, Mineralfasern, Metallfasern, Basaltfasern, Wollastonit etc.). Der Anteil an Fasern zur Verstärkung kann ebenso wie die Faserlänge variabel eingestellt werden. Beispiel: Zugabe von 5 Masse% (bezogen auf Trockenmörtelmasse) Fasern mit 3 cm Faserlänge.

Faser-Einsatzmengen: 0,2-10%, bevorzugt 0,5-7%, besonders bevorzugt 2-5%.

Der Mörtel/Beton mit den eingebrachten Fasern wird auf die Rückseite der Betonplatte bzw. die Oberfläche des 3D-Objekts gespritzt, wobei die Fasern homogen verteilt, kreuz und quer in der Mörtel-Matrix zu liegen kommen und das Bauteil dadurch massiv verstärken.

Durch das Aufbringen des Faserbetons auf das Bauteil können z.B. doppelt so hohe Bauteil-Biegezugfestigkeiten wie ohne Faserbewehrung erreicht werden.

Durch eine optionale zusätzliche mechanische Verdichtung der aufgesprühten Bewehrungsschicht durch Walzen, Glätten o.ä. kann eine Verbesserung der technischen Eigenschaften (Haftverbund, Zugfestigkeiten, Druckfestigkeiten etc.) am Objekt erreicht werden.

Versuche, bei denen auf ein- und zweilagig 3D-gedruckte Platten in einem zweiten Arbeitsschritt (Glas-)Faserspritzbeton auf die Unterseite aufgebracht wurde, zeigten einen deutlichen Zusammenhang zwischen der Schichtdicke des Faserspritzbetons und der Bauteil-Biegezugfestigkeit.

Bei einer Faserbeton-Schichtdicke von 5-6 mm erreicht das Bauteil Biegezugfestigkeits-Werte von ca. 14 MPa, bei einer Schichtdicke des Faserspritzbetons von 8-9 mm werden Biegezugfestigkeiten von ca. 18 MPa erreicht (die Stärke des 3D-gedruckten Grundkörpers ohne Faserspritzbetonschicht beträgt ca. 12-14 mm). Die Biegezugfestigkeit der Referenzprobe ohne Faserspritzbeton liegt bei ca. 10 MPa.

Durch die Glasfaserbetonauflage werden bei Bruchbelastungstests zusätzlich um einen Faktor 2-3 höhere Verformungswege bis zum Erreichen der Maximalkraft bei Bauteilversagen erzielt (von 1 mm bei der Referenzplatte auf 2-3 mm bei den Platten mit Glasfaserbeton).

Übergeordnetes Ziel des Aufbringens des Faserbetons ist die Herstellung eines hochzugfesten Verbundwerkstoffs, die Faserbetonlage kann gezielt dort aufgebracht werden, wo die größten Spannungen im Bauteil auftreten bzw. vorausgesagt werden und somit die größte Rissgefahr vorherrscht. Vorzugsweise ist die Bewehrungsschicht an jenen Bereichen aufzubringen, welche auf Zug und Biegezug belastet sind.

Bis zur vorliegenden Erfindung gab es beim Beton-3D-Druck noch keine Bewehrungskonzepte, die eine einfache, kostengünstige, effiziente und schnelle Bewehrung von 3D-Bauteilen möglich machen. Die Entwicklung des erfindungsgemäßen Verfahrens ermöglicht eine einfache, gezielte und kostengünstige Bauteilverstärkung bzw. -bewehrung und hat als weiteren großen Vorteil die Unabhängigkeit von der Bauteil-Geometrie des zu bewehrenden Objektes, es muss lediglich die räumliche Zugänglichkeit der Sprühdüse für einen Fasermörtel-Auftrag gegeben sein. Die Bewehrung individuell geformter 3D-Druckobjekte wird somit erstmalig problemlos möglich.

Der Faserbeton kann in mehreren Varianten aufgebracht werden:
A) Automatische Applikation zeitgleich bereits während des 3D-Objektdrucks durch Modulaufsatz auf die Düse des 3D-Druckroboters

Gleichzeitiges Applizieren ist möglich sowohl bei vollflächiger Beschichtung als auch bei partieller Beschichtung von ausgewählten Flächen (nicht das ganze Objekt) bzw. Beschichtung in unterschiedlichen Schichtdicken (z.B. um Lasten gezielter abzuleiten oder besondere Stabilitäten zu erreichen).

Die Applikation kann u.a. parallel durch einen zweiten Roboter, welcher mit dem Druckroboter synchronisiert ist, durchgeführt werden.

B) Automatische oder manuelle Applikation in einem zweiten Arbeitsschritt
a) durch Umbau der Druckdüse des 3D-Roboters bzw. Düsenführungssystems auf eine Spritzdüse
b) durch einen zweiten Spritzroboter bzw. Düsenführungssystem
c) händische Düsenführung

## Patentansprüche

1. Verfahren zur Herstellung von armierten 3D-gedruckten beton- bzw. mörtelbasierten Objekten wie z.B. plattenförmigen Gegenständen, die eben, einfach gekrümmt oder doppelt gekrümmt sind, wobei zunächst ein nicht armierter Grundkörper im 3D-Druck hergestellt wird, **dadurch gekennzeichnet, dass** auf den Grundkörper ein faserarmierter Beton oder Mörtel mit einer Düse aufgesprüht wird, in welcher ein Endlos-Faserstrang mit Hilfe eines Messers auf definierte Faserlänge geschnitten wird, wonach die Faserstücke mittels Luftdrucks in den Beton bzw. Mörtel eingebracht werden, so dass feinteiliger Mörtel und Fasern in einem Luft-Mörtel-Faser-Gemisch aus der Düse geschleudert und auf den 3D-gedruckten Grundkörper im Verbund appliziert werden.

2. Verfahren nach Anspruch 1, **dadurch gekennzeichnet, dass** für den Endlos-Faserstrang Glasfasern, Carbonfasern, Polymerfasern, Basaltfasern, Metallfasern oder mineralische Fasern verwendet werden.

3. Verfahren nach Anspruch 1 oder 2, **dadurch gekennzeichnet, dass** das Aufsprühen des faserarmierten Betons oder Mörtels vollflächig auf bestimmten oder allen Seiten des Bauteils erfolgt, z.B. auf der Rückseite von Platten.

4. Verfahren nach Anspruch 1 oder 2, **dadurch gekennzeichnet, dass** das Aufsprühen des faserarmierten Betons oder Mörtels partiell auf bestimmten Teilflächen erfolgt.

5. Verfahren nach einem der Ansprüche 1 bis 4, **dadurch gekennzeichnet, dass** zumindest ein Befestigungselement gleichzeitig mit dem Aufsprühen des faserarmierten Betons oder Mörtels in den Gegenstand eingesprüht wird.

6. Verfahren nach einem der Ansprüche 1 bis 5, **dadurch gekennzeichnet, dass** eine zusätzliche mechanische Verdichtung der aufgesprühten Bewehrungsschicht durch Walzen, Glätten o.ä. durchgeführt wird.

## Claims

1. A method for the production of reinforced 3D printed concrete or mortar based objects, such as plate shaped articles which are flat, single curved, or double curved, wherein at first a non reinforced basic element is produced in 3D printing, **characterized in that** a fiber reinforced concrete or mortar is sprayed onto the basic element by means of a nozzle in which an endless fiber strand is cut to a defined fiber length by means of a cutter, after which the fiber pieces are introduced into the concrete or mortar by means of air pressure, such that finely divided mortar and fibers are thrown in an air mortar fiber mixture from the nozzle and applied onto the 3D printed basic element in composite.

2. The method according to claim 1, **characterized in that** one or more of glass fibers, carbon fibers, polymer fibers, basalt fibers, metal fibers and mineral fibers are used for the endless fiber strand.

3. The method according to claim 1 or 2, **characterized in that** the spraying of the fiber reinforced concrete or mortar is carried out over the entire surface on certain or all sides of the component, e.g. on the back side of plates.

4. The method according to claim 1 or 2, **characterized in that** the spraying of the fiber reinforced concrete or mortar is carried out partly on certain partial surfaces.

5. The method according to any one of claims 1 to 4, **characterized in that** at least one fastening member is sprayed into the article at the same time as the fiber reinforced concrete or mortar is sprayed on.

6. The method according to any one of claims 1 to 5, **characterized in that** an additional mechanical compression of the sprayed on armour layer is carried out by rolling, smoothing or the like.

## Revendications

1. Procédé de fabrication, par impression 3D, d'objets armés à base de béton et/ou de mortier, s'agissant par exemple d'objets en forme de plaques, qui sont plats, courbés ou à double courbure, consistant à fabriquer d'abord, par impression 3D, un corps de base qui n'est pas armé, **caractérisé en ce que** l'on projette du béton ou mortier armé de fibres sur ledit corps de base au moyen d'une buse dans laquelle un filament de fibre sans fin est découpé, à l'aide d'un couteau, en fibres d'une longueur définie pour ensuite introduire les morceaux de fibres par pression d'air dans le béton et/ou mortier, faisant en sorte que ladite buse projette du mortier à structure fine et des fibres au sein d'un mélange air-mortier-fibres afin de les appliquer, sous une forme composite, sur le corps de base réalisé par impression 3D.

2. Procédé selon la revendication 1, **caractérisé en ce que** l'on utilise, pour le filament de fibre sans fin, des fibres de verre, des fibres de carbone, des fibres de polymère, des fibres de basalte, des fibres métalliques ou des fibres minérales.

3. Procédé selon les revendications 1 ou 2, **caractérisé en ce que** le béton ou mortier armé de fibres est projeté, en couvrant toute la surface concernée, sur certaines ou sur toutes les faces de l'élément de construction, par exemple sur la face arrière de plaques.

4. Procédé selon les revendications 1 ou 2, **caractérisé en ce que** le béton ou mortier armé de fibres est projeté partiellement sur certaines parties des faces concernées.

5. Procédé selon l'une des revendications 1 à 4, **caractérisé en ce qu'**en même temps que la projection du béton ou mortier armé de fibres, on introduit par projection au moins un élément de fixation dans ledit objet.

6. Procédé selon l'une des revendications 1 à 5, **caractérisé en ce que**, de manière supplémentaire, on réalise, par laminage, lissage ou par d'autres procédés apparentés, un compactage mécanique de la couche d'armature appliquée par projection.
